# EUROPÄISCHE PATENTANMELDUNG

(11) **EP 1 106 227 A1**
(43) Veröffentlichungstag der Anmeldung: **13.06.2001**
(21) Anmeldenummer: 99811052.2
(22) Anmeldetag: 16.11.1999
(51) Int. Cl.: B01D 29/33, B01D 29/54

(54) **Kerzenanschwemmfilter und Verfahren zur Restvolumenfiltration**

(71) Anmelder: Filtrox AG, 9000 St. Gallen (CH)
(72) Erfinder: Hildebrand, Peter, 9320 Arbon (CH); Kundert, Paul, 9402 Mörschwil (CH)
(74) Vertreter: Hepp, Dieter

(57) **Zusammenfassung**

Ein Kerzenanschwemmfilter weist einen Unfiltratraum (1), mit darin etwa vertikal angeordneten Filterelementen (2) und einer Bodenplatte (5) auf. Filterelemente (2) sind an der Bodenplatte (5) befestigt und ragen in den Unfiltratraum (1). Die Hohlräume (13) der Filterelemente (2) sind durch Öffnungen (6) in der Bodenplatte (5) mit einem Filtratraum (7) verbunden; die Filterfläche (4) der Filterelemente (2) reicht in einer bevorzugten Ausführungsform bis zur Bodenplatte (5) hinab. Die Unfiltratleitung (8) mündet eben in die Bodenplatte (5). Die Konstruktion dient der Restvolumenfiltration; durch Beaufschlagen mit Gas wird die Restflüssigkeit durch Filtration aus dem Unfiltratraum (1) entfernt. Vorteil ist eine grosse Filterfläche (4) für die Restvolumenfiltration.

## Beschreibung

Gegenstand der vorliegenden Erfindung ist ein Kerzenanschwemmfilter umfassend einen Unfiltratraum und ein Verfahren zur Restvolumenfiltration gemäss dem Oberbegriff der unabhängigen Patentansprüche.

Kerzenfilter mit zylinderförmigen, hängend angeordneten Filterelementen sind seit langem bekannt und werden zusammen mit Filterhilfsmitteln in der Anschwemmfiltration von Getränken eingesetzt. Solche Kerzenfilter sind beispielsweise in EP 203 206 beschrieben. Beim Kerzenfilter wird die zu filtrierende Flüssigkeit mit den darin suspendierten, abzutrennenden Trübstoffen in einem Unfiltratraum unter Flüssigkeitsdruck an die Filterelemente angeschwemmt. Bei der als Anschwemmfiltration bezeichneten Technik wird diesem Unfiltratstrom zusätzlich ein Filterhilfsmittel, z.B. Kieselgur, zugesetzt. Der Aufbau der eigentlichen Filterschicht auf der Oberfläche der Filterelemente vollzieht sich dann durch die gewollte Rückhaltung des Filterhilfsmittels auf der nur für die Flüssigkeit durchlässigen Oberfläche der Filterelemente. Hat sich nach einer kurzen Anlaufphase eine solche Filterhilfsmittelschicht gebildet, werden auch die Trübstoffe beim Durchtritt der Flüssigkeit in den Filtratraum zuverlässig auf der Oberfläche der Filterelemente zurückgehalten. Zusätzliche Stabilisiermittel sorgen für mechanische Stabilität des Filter- oder Trubkuchens auf der Oberfläche der Filterelemente. Dieser Trubkuchen muss am Ende der Filtration von den Filterelementen bzw. aus dem Unfiltratraum entfernt werden. Dieser Umstand begrenzt die Betriebsdauer. Ein kontinuierlicher Betrieb ist nicht möglich. Dabei ergibt sich das Problem, dass gegen Ende der Filtration der Behälter nicht mehr vollständig mit Unfiltratflüssigkeit gefüllt ist. Dadurch kann der für die Filtration notwendige Druckgradient in der Filterschicht nicht mehr durch weitere Zufuhr von Unfiltrat aufrechterhalten werden. Die restliche Getränkeflüssigkeit im Unfiltratraum ist aber zu wertvoll, um sie als Verlust abzuschreiben. Man filtriert auch dieses Restvolumen und entfernt es so aus dem Unfiltratraum. Die Restvolumenfiltration erfordert ein besonderes Verfahren.

EP 556 188 beschreibt einen zylindrischen Filterkessel mit konischem Boden. Am Dekkel ist eine verschliessbare Zuleitung für unter Druck stehendes Gas angebracht. Die Filterelemente sind am unter dem Deckel befindlichen Filtratsammler befestigt und erstrecken sich vertikal in den Innenraum des Unfiltratraums hinein, erstrecken sich jedoch nicht bis in die konische Sektion. Lediglich ein einzelnes Filterelement, das sogenannte Restfilterelement, reicht weit bis in die konische Sektion hinunter; es verfügt über eine eigene, verschliessbare Filtratableitung und ist durch eine Trennwand vom restlichen Innenraum des Unfiltratraums und den anderen Filterelementen abgetrennt. Die Trennwand reicht bis in die konische Sektion, ist jedoch nach unten offen. Bei der Restvolumenfiltration wird durch Gaszufuhr Druckluft in den Innenraum um die übrigen Filterelemente gepumpt; deren Filtratableitung ist verschlossen. Die im Innenraum noch verbliebene, restliche Unfiltratflüssigkeit wird dadurch wie in einer Steigleitung in das Kompartment des Restfilterelementes hinaufgedrückt und bedeckt dieses völlig.

Ein Nachteil dieses Verfahrens ist, dass zur Restvolumenfiltration nur eine sehr geringe Filteroberfläche zur Verfügung steht. Von den übrigen Filterelementen abfallender Trubkuchen kann in das enge Kompartment zusammen mit der Flüssigkeit eingetragen werden und unter Umständen zu Verstopfungen und Fehlfunktionen führen.

EP 715 875 beschreibt einen auch für die Anschwemmfiltration geeigneten Kerzenfilter, dessen Unfiltratraum einen als flaches Hohlelement gearbeiteten Boden aufweist; der Boden ist gleichzeitig Restfilterelement mit eigener, verschliessbarer Zuleitung zum allgemeinen Filtratraum. Nach Beaufschlagung des Unfiltratraums mit Gas tritt das Filtrat in den Hohlraum, der als Filtratraum dient, über und wird abgeleitet. Das ganze Bodenelement ist drehbar gelagert und fungiert als Bodenklappe des Unfiltratraums, die nach Öffnung den Austrag des Trubkuchens ermöglicht. Die vertikalen Filterelemente sind am Filtratraum befestigt und erstrecken sich vom oberen Bereich des Behälters hinunter bis zu einer Distanz über dem Bodenelement, die mindestens dem Schwenkradius des Bodenelements entspricht. Ein Nachteil dieses Verfahrens ist, dass wieder nicht die volle Fläche der Filterelemente für die Restvolumenfiltration genutzt werden kann, sondern dass mindestens das Bodenrestvolumen nur über ein Restfilterelement geringerer Oberfläche entfernt werden kann.

Zudem werden die bekannten Restfilterelemente erst während der Restvolumenfiltration mit hoher Durchströmung beaufschlagt. Demzufolge ist die Filterschicht auf dem Restfilterelement zu Beginn der Restvolumenfiltration nicht immer vollständig.

Aufgabe der vorliegenden Erfindung ist es, die Nachteile des Bekannten zu vermeiden, insbesondere einen für die Anschwemmfiltration geeigneten Kerzenfilter zu schaffen, der auf einfache Weise eine schnelle Restvolumenfiltration mit einer hohen Filtrationsrate erlaubt. Eine weitere Aufgabe der vorliegenden Erfindung ist es, ein Verfahren zur schnellen Restvolumenfiltration Anschwemmkerzenfilters zu schaffen.

Diese Aufgaben werden erfindungsgemäss durch die kennzeichnenden Merkmale der unabhängigen Patentansprüche gelöst. Ein Kerzenanschwemmfilter umfasst einen Unfiltratraum mit einer Bodenplatte und vorzugsweise etwa vertikal angeordneten Filterelementen, deren Oberfläche wenigstens zum Teil als Filterfläche dient. Die Filterelemente erstrecken sich von der Bodenplatte in den Unfiltratraum, wobei ein Hohlvolumen im Inneren der Filterelemente durch Öffnungen in der Bodenplatte des Unfiltratraums mit einem Filtratraum verbunden ist. Vorteil dieser erfindungsgemässen Anordnung ist die Möglichkeit einer Restvolumenfiltration unter Benutzung der normalen Filterelemente, und damit das Erzielen einer hohen Filtrationsrate bei der Restvolumenfiltration.

Bei der Beaufschlagung des Behälters mit unter Druck stehendem Gas kann die volle noch von Unfiltrat umgebene Oberfläche der Filterelemente zur Restvolumenfiltration genutzt werden. Im Mittel kann daher bei der Restvolumenfiltration nach dem erfindungsgemässen Verfahren noch 20 - 25% der während des Normalbetriebs erzielten Filterleistung erbracht werden. Der Zeitbedarf für die Restvolumenfiltration (bzw. damit die Entleerung des Unfiltratraumes) wird damit wesentlich gesenkt. Die bekannten Konstruktionen mit Restfilterelementen erzielen meist nur um die 5%, keinesfalls jedoch mehr als 10% dieser Filterleistung. Zudem ist beim erfindungsge-mässen Kerzenanschwemmfilter bereits zu Beginn der Restvolumenfiltration die Filterschicht an den gleichzeitig als Kerzenfilterelementen dienenden Filterkerzen vorhanden und intakt. Der Unfiltratraum kann durch das Beaufschlagen mit Gas vollständig entleert werden, ohne das ein Teil der kostbaren Unfiltratflüssigkeit (z.B. Wein) verworfen werden muss. Vorzugsweise ragen die Filterelemente bezüglich der (horizontal gelagerten) Bodenplatte vertikal in den Unfiltratraum. Dadurch bedecken auch noch kleinste Restvolumina stets einen Teil der Filterelemente.

In einer bevorzugten Ausführungsform des Kerzenanschwemmfilters mündet eine Unfiltratleitung in die Bodenplatte des Unfiltratraums; ein Ende der Unfiltratleitung verläuft eben mit der Bodenplatte. Als Ende wird in diesem Kontext die Öffnung der Unfiltratleitung zum Unfiltratraum hin bezeichnet. Vorteil ist, dass nach der Restvolumenfiltration (durch Reinigungsmittel abgelöste) Trubkuchen durch die Unfiltratleitung ausgeschwemmt und so der Trubkuchen aus dem Unfiltratraum entfernt werden kann. Ausserdem können eine oder mehrere Öffnungen in den Seitenwänden oder im Deckelbereich des Unfiltratraumes dem Abspritzen der Filterelemente mit Reinigungsmittel dienen; es kann auch eine zugleich der Gaszufuhr dienende Öffnung für diesen Zweck verwandt werden. Der Rohrdurchmesser der Unfiltratleitung kann so gewählt werden. Er sollte es erlauben, den ausgeschwemmten Trubkuchen ohne die Gefahr einer Verstopfung abzuleiten.

Vorzugsweise ist die Bodenplatte etwa flach. Sie kann ganz flach sein, oder aber auch zur Mündung der Unfiltratleitung in der Bodenplatte hin leicht abfallend gearbeitet sein. Dies erleichtert das Ausschwemmen von Trubkuchen über die Unfiltratleitung nach der Entleerung des Unfiltratraums. Die Bodenplatte kann auch bei im Ganzen etwa flacher Ausführung mit einem Relief versehen sein, z.B. Rillen, um letzte Flüssigkeitsreste zu sammeln und gezielt abzuleiten. Die erfindungsgemässe Vorrichtung vermeidet aufwendige Einrichtungen zur Entfernung des Trubkuchens bzw. bei der Reinigung schwer zugänglicher Restfilterelemente.

Alternativ ist die Bodenplatte zur Unfiltratleitung hin abfallend gearbeitet. Dies erleichtert das Ausschwemmen des Trubkuchens nach der Entleerung des Unfiltratraumes.

Vorzugsweise ist in einem oberen Abschnitt des Unfiltratraumes ein verschliessbarer Gaseinlass angebracht. Dadurch wird vermieden, dass bei der Beaufschlagung des Unfiltratraums mit Gas aufsteigende Gasblasen zu Turbulenzen und zum Ablösen des Trubkuchen von den Filterelementen führen. Eine derartige Anordnung der Gaszufuhr ist jedoch keine Voraussetzung für die erfindungsgemässe Funktion eines Kerzenanschwemmfilters im Sinne des Hauptanspruchs.

Eine weitere bevorzugte Ausführungsform der erfindungsgemässen Vorrichtung besitzt Filterelemente, deren Filterfläche bis zur Bodenplatte des Unfiltratraums hinabreicht. Derartige Filterelemente können z.B. über Gewinde in die Bodenplatte hineingeschraubt sein, sodass keine in den Innenraum hineinragende Befestigung z.B. in Form einer Manschette notwendig ist. Dies ermöglicht ein vollständiges Entleeren des Unfiltratraums durch Restvolumenfiltration. Die zu filtrierende Flüssigkeit kann vollständig einer Weiterverarbeitung zugeführt werden; es muss kein Restvolumen verworfen werden.

Eine weitere bevorzugte Ausführungsform ist ein Kerzenanschwemmfilter im Sinne dieser Erfindung, der über ein zusätzliches an der Bodenplatte befestigtes Restfilterelement verfügt, das über eine eigene, verschliessbare Verbindung des Filtrats zum Filtratraum verfügt. Ein solches Restfilterelement kann z.B. ein gleichfalls am Boden befestigtes, etwa vertikal angeordnetes Filterelement von nur geringer Höhe sein. Es kann über einen gleichfalls durch die Bodenplatte hindurchführenden, separaten, verschliessbaren Zufluss zum Filtratraum verfügen. Es kann sich auch um ein eben in die Bodenplatte eingelassenes Filterelement handeln. Vorteil ist, dass ein solches Restfilterelement während der Restvolumenfiltration als Option für die Filtration geringster Restvolumina zur Verfügung steht. Auf diese Weise kann mit einem erfindungsgemässen Anschwemmkerzenfilter, gegen Ende der Entleerungsphase, auch bei Rissbildung im Trubkuchen die Restvolumenfiltration zu Ende geführt werden. Auch kann so am Ende der Restvolumenfiltration, mit nur noch geringer, von Flüssigkeit bedeckter Filteroberfläche, ein deutlich höherer Gasdruck angewandt werden, ohne einen Gasdurchbruch durch die Filterelemente zu befürchten.

In einer weiteren bevorzugten Ausführungsform des erfindungsgemässen Kerzenanschwemmfilters verfügt der Filtratraum über eine ventilgesteuerte Filtratrückführung in den Unfiltratraum. Dies ist vorteilhaft, wenn zu Beginn des Normalbetriebs des Kerzenanschwemmfilters die auf den Filterelementen aufgebaute entstehende Filterschicht noch nicht vollständig ist und so Trübstoffe auch im Filtrat enthalten sind. Ein solcher Rücklaufbetrieb in der Anfangsphase erlaubt es, mit Trübstoffen angereichertes, nicht für die Weiterverwertung geeignetes Filtrat erneut zu filtrieren.

In Kombination mit der vollständig durchführbaren Restvolumenfiltration mit einem erfindungsgemässen Kerzenanschwemmfilter im Sinne der vorliegenden Erfindung wird so der durch den notwendigen Aufbau der Filterschicht durch Anschwemmung bedingte Verlustanteil der zu filtierenden Getränkeflüssigkeit praktisch beseitigt. Es entstehen nur geringste, die Wirtschaftlichkeit wenig beeinträchtigende Produktverluste.

Ein weiterer Gegenstand der vorliegenden Erfindung ist ein Verfahren zur Restvolumenfiltration eines erfindungsgemässen Kerzenanschwemmfilters, wobei zum Entleeren des Unfiltratraums dieser mit einem Gas beaufschlagt wird und das Unfiltrat durch die stehend im Unfiltratraum angeordneten Filterelemente abgeführt und filtriert wird. Das Verfahren ermöglicht deshalb vollständigen Entleerung des Unfiltratraumes.

Ein weiterer Gegenstand der vorliegenden Erfindung ist ein Kerzenanschwemmfilter umfassend wobei ein Hohlraum (13) der Filterelemente (2) nach unten hin mit dem Filtratraum verbunden ist. Eine solche Verbindung zum Filtratraum kann z.B. durch ein zwischen Filterelement und Bodenplatte angeordnetes Sammelrohr hergestellt werden. Das Rohr führt dann das Filtrat aus dem Kerzenanschwemmfilter ab. Es sind aber auch andere Ausführungsformen möglich. Ein Sammelrohr muss nicht gleichzeitig als Befestigung der Filterelemente dienen; Ihre Last kann auch durch zusätzliche Konstruktionselemente geregelt werden, z.B. können die Filterelemente an der Decke des Unfiltratraums befestigt sein. Die Bodenplatte kann flach oder leicht gewölbt sein, glatt oder mit einem Relief versehen sein. Insbesondere eien zu einer einmündenden Unfiltratzuleitung hin abfallende Bodenplatte stellt eine mögliche, bevorzugte Ausführungsform dar.

Die Erfindung wird im Folgenden in Ausführungsbeispielen und Zeichnungen näher erläutert. Die Zeichnungen zeigt:
- Figur 1: schematische Darstellung eines erfindungsgemässen Kerzenanschwemmfilter mit flacher Bodenplatte,
- Figur 2: ein alternatives Ausführungsbeispiel eines erfindungsgemässen Kerzenanschwemmfilter mit geneigter Bodenplatte,
- Figur 3: vergrösserte Darstellung der Befestigung eines Filterelements an der Bodenplatte (Ausschnitt) im Querschnitt,
- Figur 4 - 6: schematische Darstellung des Verfahrensschritte der Restvolumenfiltration

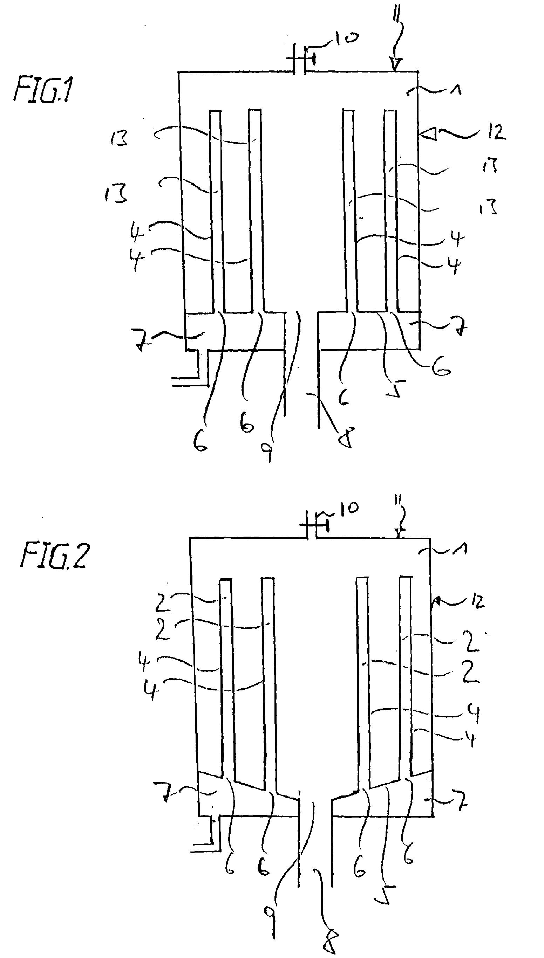

Figur 1 zeigt einen erfindungsgemässen Kerzenanschwemmfilter mit flacher Bodenplatte 5. Ein derartiger Kerzenanschwemmfilter dient der Filtration von mit Trübstoffen beladenen Getränkeflüssigkeiten, z.B. Wein oder Fruchtsäften. Der Kerzenanschwemmfilter besteht im wesentlichen aus einem Unfiltratraum 1 und einem Filtratraum 7. Eine Bodenplatte 5 begrenzt den Unfiltratraum 1 nach unten hin. Der Unfiltratraum 1 ist mit einem verschliessbaren Gaseinlass 10 ausgestattet. Der Filtratraum 7 stellt einen Hohlraum unter der Bodenplatte 5 dar und ist durch Öffnungen 6 in der Bodenplatte 5 mit dem Inneren von Filterelementen 2 verbunden, zum Unfiltratraum 1 hin aber dicht. Die Filterelemente 2 sind senkrecht an der Bodenplatte 5 angeordnet und erstrecken sich etwa vertikal den Unfiltratraum 1 hinein. Ihre Zahl kann in verschiedenen Ausführungen verschieden sein. Die Zahl kann in Ausführungen für verschiedene Anwendungen entsprechend der gewünschten Filtrationsrate unter Berücksichtigung der Eigenschaften von Filterhilfsmittel und Getränketyp gewählt werden. Bei der Getränkefiltration im Normalbetrieb werden oft Filtrationsraten z.B. um die 5 Hektoliter/hm² angestrebt.

Bei den Filterelementen 2 kann es sich um dem Fachmann bekannte Spaltfilterkerzen handeln, es kann sich selbstverständlich auch um andere bekannte Filterelemente 2 wie z.B. Siebfilterkerzen handeln. Der Aufbau einer Filterschicht erfolgt durch die gewollte Rückhaltung der in der zu filtrierenden Flüssigkeit suspendierten Filterhilfsmittel und/oder Stabilisierungsmittel. Als Filterhilfsmittel werden beispielsweise natürliche Diatomeenerde, Kieselgur, Perlite, Cellulose, Kohle oder andere bekannte Mittel verwandt. Der Durchtritt der Flüssigkeit unter Rückhaltung von Filterhilfsmittel und/oder den der Flüssigkeit eigenen Trübstoffen wird durch einen Druckgradienten, das heisst durch einen im Unfiltratraum 1 höheren Flüssigkeitsdruck im Vergleich zum Filtratraum 7 erzeugt.

Die Aufrechterhaltung der für die Filtration erforderlichen Druckdifferenz zwischen Unfiltrat- 1 und Filtratraum 7 während der Restvolumenfiltration ist kein Problem. Im Allgemeinen zeigt ein Trubkuchen, der zum Zeitpunkt des nahen Endes der Getränkefiltration im Normalbetrieb üblicherweise eine Druckdifferenz von mehreren bar (Grössenordnung 2 - 6 bar) aufweist, keine Rissbildung bei einem Gasdruck im Unfiltratraum 1 in der Grössenordnung von z.B. 0,2. Das heisst, der gebildete Trubkuchen aus Filterhilfsmittel, Stabilisierungsmittel und Trubstoffen aus dem Getränk weist im Allgemeinen einen dem aus der Membrantechnik bekannten "Bubble-Point- Druck" vergleichbaren Gasdurchbruchswert von weit über 0,2 bar auf; erst bei einem Druck von über einem bar tritt ein Gasdurchbruch durch die im Querschnitt grössten, vorher mit Flüssigkeit gefüllten Kanäle auf.

Die obere Begrenzung 11 des Unfiltratraums 1 ist in der vorliegenden Ausführungsform fester Bestandteil des Unfiltratraums 1; es ist aber auch möglich, einen separaten Behälterdeckel mit dem Hauptkörper 12 des Unfiltratraum 1 fest zu verbinden. Derartige Ausführungen sind aus dem Stand der Technik bekannt.

Eine Unfiltratleitung 8 zum Einleiten einer Flüssgkeit in den Unfiltratraum 1 mündet eben in die Bodenplatte 5. Die Unfiltratleitung 8 erlaubt sowohl den Einlauf von Flüssigkeit wie auch den Austrag des Trubkuchens in einer Reinigungsphase nach der Restvolumenfiltration. Der Gaseinlass 10 kann dann auch dem Einbringen von Reinigungsmittel auf die Filterelemente 2 dienen.

Figur 2 zeigt einen Unfiltratraum 1 gemäss Fig.1., aber mit einer zur Unfiltratleitung 8 hin leicht abfallenden Bodenplatte 5. In dieser Ausführung ist das Ausschwemmen des Trubkuchens über die Unfiltratleitung 8 erleichtert, da eine Flüssigkeit stets der Unfiltratleitung als tiefstem Punkt zufliesst. Es sind natürlich auch beliebige Variationen der Krümmung der Bodenplatte 5 möglich.

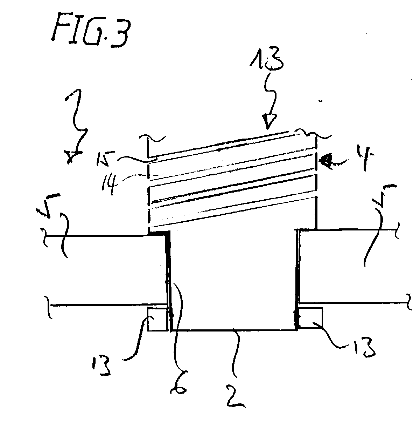

Figur 3 zeigt die Befestigung eines Filterelementes 2 an der Bodenplatte 5 in einem vergrössertem Ausschnitt im Querschnitt. Die Bodenplatte 5 hat Öffnungen 6, in die ein zylindrisches Filterelement 2 eingesetzt ist. In der vorliegenden Ausführungsform handelt es sich um eine Spaltfilterkerze (2).Ein metallisches Band windet sich um die Oberfläche (4) des Filters (2). Dabei bleibt ein Spaltöffnung (5) in der Grössenordnung einiger um frei. Diese Spaltöffnung (5) dient dem Durchtritt von Flüssigkeit aus dem Unfiltratraum (1) in den Filtratraum (7). Haltering 13 hält das Filterelement 2 auf der anderen Seite fest, z.B. durch eine Schraubverbindung. Es sind auch andere Befestigungen möglich, z.B. das die Öffnung in der Bodenplatte selbst mit einem Gewinde zum Verschrauben ausgestattet ist. Es sind aber auch andere Befestigungen, z.B. durch form- und kraftschlüssigen Einschub in eine entsprechend dimensionierte Öffnung 6, möglich. In jedem Fall ragt kein der Befestigung dienendes Element von der Bodenplatte 5 in den Unfiltratraum 1. Der Spaltöffnung (15) in der Filterfläche 4 des Filterelementes 2 erstreckt sich bis knapp zur Bodenplatte 5 hinab und erlaubt auch bei niedrigstem Flüssigkeitsniveau über der Bodenplatte 5 noch die Filtration der Flüssigkeit in den Filtratraum 7 (unter Gasdruck) vermittels der Spaltöffnung (15).

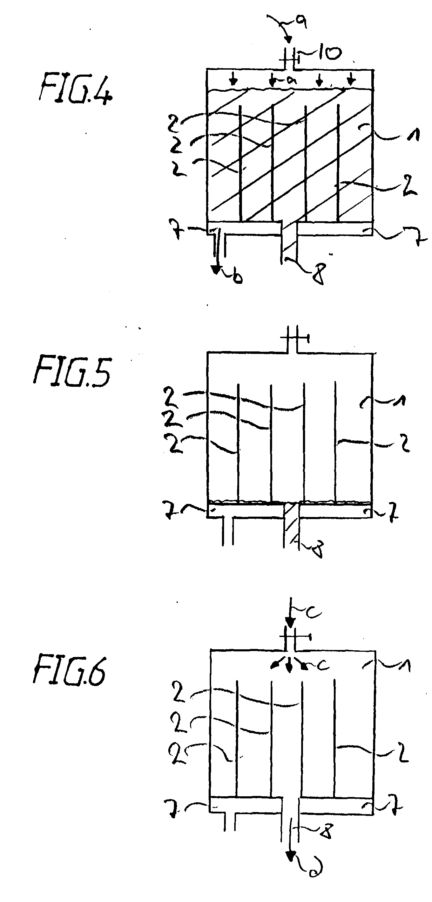

Figur 4, 5 und 6 zeigen den schematischen Ablauf der Restvolumenfiltration mit einer erfindungsgemässen Ausführungsform in einem erfindungsgemässen Verfahren.

Fig. 4 zeigt das Beaufschlagen (Pfeile a) des Unfiltratraumes 1 mit Gas zu Beginn der Restvolumenfiltration. Die im Unfiltratraum 1 verbliebene Flüssigkeit wird über die Filterelemente 2 filtriert und über den Filtratraum 7 abgeführt (Pfeil b). Die Unfiltratleitung 8 ist verschlossen. Dabei senkt sich das Niveau des Unfiltrats im Unfiltratraum 1 ab.

Fig. 5 zeigt das Ende der Restvolumenfiltration. Die Flüssigkeit im Unfiltratraum 1 ist zur Gänze durch Filtration entfernt worden. Die Unfiltratleitung 8 kann geöffnet werden, um in der Unfiltratleitung 8 stehendes Rest-Unfiltrat (Totraumvolumen) abzulassen. Die Verluste sind dank der sich bis zur Bodenplatte 5 erstreckenden Filterflächen 4 gering (siehe Figur 3)

Fig. 6 zeigt die Reinigung des Unfiltratraumes 1 und das Ausspülen des Trubkuchens nach der Restvolumenfiltration. Eine Reinigungsflüssigkeit z.B. Lauge kann durch eine oder mehrere Öffnungen eingebracht werden, hier z.B. den Gaseinlass 10 (Pfeil c). Vorzugsweise werden die Filterelemente 2 direkt abgesprüht. Die Reinigungsflüssigkeit vermischt mit Trubkuchen wird über die Unfiltratleitung 8 ausgeschwemmt, die in der Bodenplatte eingelassen ist und als Abfluss dient (Pfeil d). Es sind aber auch andere Ausführungen denkbar, bei denen ein separater Abfluss in der Bodenplatte 5 vorhanden ist.

## Patentansprüche

1. Kerzenanschwemmfilter umfassend einen Unfiltratraum (1) mit einer Bodenplatte (5) und im Unfiltratraum angeordnete Filterelemente (2), vorzugsweise etwa vertikal angeordneten Filterelementen (2), deren Oberfläche (3) wenigstens zum Teil als Filterfläche (4) dient, dadurch gekennzeichnet, dass die Filterelemente (2) sich von der Bodenplatte (5) in den Unfiltratraum (1) erstrecken, wobei ein Hohlraum (13) im Inneren der Filterelemente (2) durch Öffnungen (6) in der Bodenplatte (5) des Unfiltratraums (1) mit einem Filtratraum (7) verbunden sind.

2. Kerzenanschwemmfilter gemäss Anspruch 1, dadurch gekennzeichnet, dass eine Unfiltratleitung (8) in die Bodenplatte (5) des Unfiltratraums (1) mündet, wobei ein Ende (9) der Unfiltratleitung (8) etwa eben mit der Bodenplatte (5) verläuft.

3. Kerzenanschwemmfilter gemäss Anspruch 1 oder 2, dadurch gekennzeichnet, dass die Bodenplatte (5) etwa flach ist.

4. Kerzenanschwemmfilter gemäss einem der vorhergehenden Ansprüche, dadurch gekennzeichnet, dass die Bodenplatte (5) zur Unfiltratleitung (8) hin abfallend gearbeitet ist.

5. Kerzenanschwemmfilter gemäss einem der vorhergehenden Ansprüche, dadurch gekennzeichnet, dass der Unfiltratraum (1) in einem oberem Abschnitt einen verschliessbaren Gaseinlass (10) besitzt.

6. Kerzenanschwemmfilter gemäss einem der vorhergehenden Ansprüche, dadurch gekennzeichnet, dass die Filterflächen (4) der Filterelemente (2) bis zur Bodenplatte (5) hinabreichen.

7. Kerzenanschwemmfilter gemäss einem der vorhergehenden Ansprüche, dadurch gekennzeichnet, dass an der Bodenplatte (5) ein zusätzliches Restfilterelement befestigt ist, das über eine eigene, verschliessbare Verbindung mit dem Filtratraum (7) verfügt.

8. Kerzenanschwemmfilter gemäss einem der vorhergehenden Ansprüche, dadurch gekennzeichnet, dass der Filtratraum (7) über eine ventilgesteuerte Filtratrückführung in den Unfiltratraum (1) verfügt.

9. Verfahren zur Restvolumenfiltration eines Kerzenanschwemmfilters mit einem Unfiltratraum (1) und mit in den Unfiltratraum (1) hineinragenden Filterelementen (2), die an einer Bodenplatte (5) des Unfiltratraumes (1) befestigt sind und durch Öffnungen (6) mit einem Filtratraum (7) verbunden sind, insbesondere in einem Kerzenanschwemmfilter gemäss der Ansprüche 1-8, dadurch gekennzeichnet dass zum Entleeren des Unfiltratraumes (1) dieser mit einem Gas beaufschlagt wird, wobei das Unfiltrat durch die Filterelemente (2) abgeführt und dabei filtriert wird.

10. Ein Kerzenanschwemmfilter umfassend einen Unfiltratraum (1) mit einer Bodenplatte (5) und im Unfiltratraum (1) angeordneten Filterelementen (2), vorzugsweise etwa vertikal angeordneten Filterelemente (2), deren Oberfläche (3) wenigstens zum Teil als Filterfläche (4) dient, dadurch gekennzeichnet, dass ein Hohlraum (13) der Filterelemente (2) nach unten hin mit nach unten hin mit dem Filtratraum (7) verbunden ist.
